# EUROPEAN PATENT SPECIFICATION

(11) **EP 0 458 966 B1**
(45) Date of publication and mention of the grant of the patent: **19.07.1995**
(21) Application number: 91907200.9
(22) Date of filing: 03.12.1990
(51) Int. Cl.: H04N 1/40

(54) **MIXED MATRIX IMAGE PROCESSING FOR RENDERING HALFTONE IMAGES WITH VARIABLE DOT SIZES**
GEMISCHTE MATRIX-BILDVERARBEITUNG ZUR WIEDERGABE VON HALBTONBILDERN MIT VERÄNDERLICHER PUNKTGRÖSSE
TRAITEMENT D'IMAGES A MATRICE MIXTE POUR LA REPRODUCTION D'IMAGES A DEMI-TEINTES AVEC POINTS DE DIMENSIONS VARIABLES

(30) Priority: 14.12.1989 US 450795
(43) Date of publication of application: 04.12.1991
(73) Proprietor: EASTMAN KODAK COMPANY, Rochester, New York 14650-2201 (US)
(72) Inventor: NG, Yee, S., Fairport, NY 14450 (US); TAI, Hwai-Tzuu, Rochester, NY 14626 (US)
(74) Representative: Lewandowsky, Klaus, Dipl.-Ing.
(86) International application number: US9007037
(87) International publication number: WO9109489

(56) References cited:
- EP-A- 126 782
- EP-A- 248 616
- US-A- 3 922 484
- US-A- 4 449 150
- RCA REVIEW vol. 31, no. 3, September 1970, Princeton (US) pages 517-533; R.J.Klensch et al.: "Electronically Generated Halftone Pictures"
- IEEE TRANSACTIONS ON COMMUNICATIONS vol. COM29, no. 12, December 1981, NEW YORK US pages 1898-1925; J.C.Stoffel et al.: "A Survey of Electronic Techniques for Pictorial Image Reproduction"

## Description

### BACKGROUND OF THE INVENTION

### Technical Field

This invention relates generally to encoding pictorial imagery for reproduction on binary display and/or printing systems, and more particularly to increasing the number of discernible gray levels in halftone reproduction.

### Background Art

Representation of the intensity, i.e., the gray level, of a color by binary displays and printers has been the object of a variety of algorithms. Binary displays and printers are capable of making a mark, usually in the form of a dot, of a given, uniform size and at a specified resolution in marks per unit length, typically dots per inch. It has been common to place the marks according to a variety of geometrical patterns such that a group of marks when seen by the eye gives a rendition of an intermediate color tone between the color of the background (usually white paper stock) and total coverage, or solid density.

Continuous tone images contain an apparent continuum of gray levels. Some scenes, when viewed by humans, may require more than 256 discrete gray levels to give the appearance of a continuum of gray levels from one shade to another.

As an approximation to continuous tone images, pictorial imagery is represented via halftone technologies. In order to record or display a halftone image with a scanning system, one picture element on the recording or display surface consists of a j x k matrix of sub-elements where j and k are positive integers. A halftone image is reproduced by printing the respective sub-elements or leaving them blank. That is, by suitably distributing the printed marks.

Halftone image processing algorithms are evaluated in part, by their capability of delivering a complete gray scale at normal viewing distances. The capability of a particular process to reproduce high frequency renditions (fine detail) with high contrast modulation makes that procedure superior to one which reproduces such fine detail with lesser or no output contrast.

Another measure of image processing algorithm merit is the tendency to produce visual details in the output image that are not part of the original image, but are the result of the image processing algorithm. Such details are called artifacts, and include moire patterns, false contours, and false textures. Moire patterns are false details created most often by the beating between two relatively high frequency processes resulting in a signal whose spacial frequency is low enough to be seen by the viewer. False contours are the result of gray scale quantization steps which are sufficiently large to create a visible contour when the input image is truly a smooth, gradual variation from one to the other. False textures are artificial changes in the image texture which occur when input gray levels vary slowly and smoothly and the output generates an artificial boundary between the textural patterns for one gray level and the textural patterns for the next gray level.

Briefly, several of the commonly used processing algorithms include fixed level thresholding, adaptive thresholding, orthographic tone scale fonts, and electronic screening. The present invention is concerned with the latter, electronic screening.

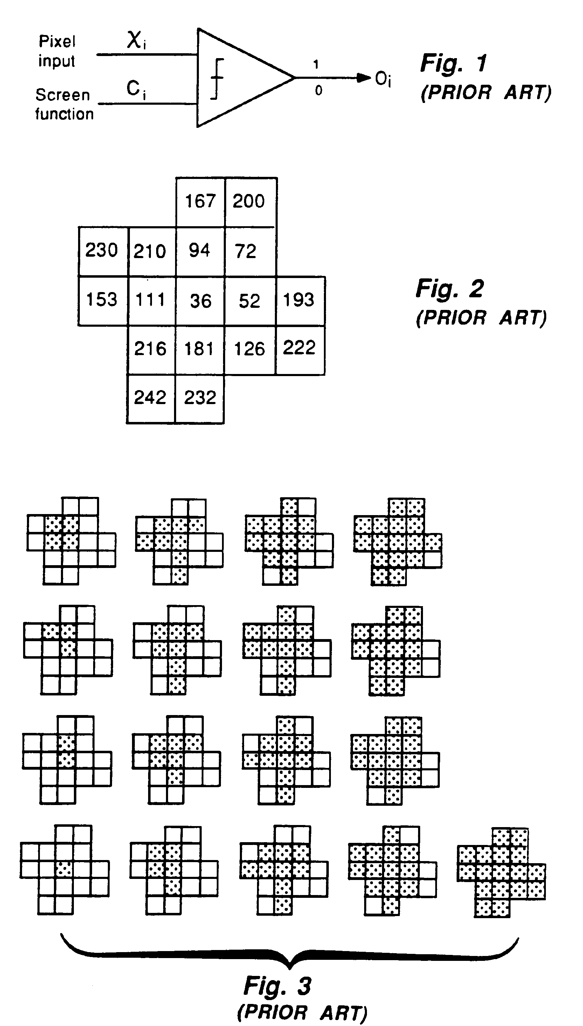

Figure 1 shows a schematic view of the electronic screening process. Signal Xᵢ represents the lightness or gray level information at a sampling point i of an image. Input signal Xᵢ of sample image picture elements is compared with a series of threshold values Cᵢ selected in sequential order from a two-dimensional matrix defined to be the halftone cell threshold set, and a print/no-print decision is made. The series of threshold values and their arrangement within the threshold set determine the gray scale range, the frequency, angle, and other properties of the halftone pictorial image. Each threshold level Cᵢ is determined by a comparison j x k matrix. When the input signal Xᵢ exceeds the threshold level Cᵢ, the corresponding sub-element is determined to have a print level or logic level "ONE". By comparing the input signal Xᵢ with the threshold levels, j x k output signals Oᵢ are produced. A density pattern consisting of a combination of j x k sub-elements is obtained by dividing each picture element into j x k sub-elements and systematically printing them or leaving them blank.

Figure 2 shows a typical two dimensional matrix halftone cell for electronic halftoning with 18 possible gray levels, used as a 45° angular screen. When the cell is repeated horizontally and vertically, it creates the entire screen function. Figure 3 shows the possible "nonwhite" halftone sub-elements which may be generated by the screen function of Figure 2.

A problem exists with the number of density levels attainable with a limited resolution and acceptable screen frequency. A 94.5 lines per inch, 45° screen using a 400 dpi system results in nineteen level halftoning, including white. Nineteen levels is not generally sufficient; more gradations being preferred. One way to get more gray levels is to reduce the number of lines per inch, but this decreases the screen frequency to a visible level.

Various screen functions have been proposed for electronic screening to minimize the number of gray levels required to manifest acceptable pictorial imagery. These existing types of screen functions, also referred to as "threshold value matrices," are roughly divided into the following two groups: (1) those in which sub-elements grow around the center core and (2) those in which the spatial frequency of the sub-elements is made to be as high as possible.

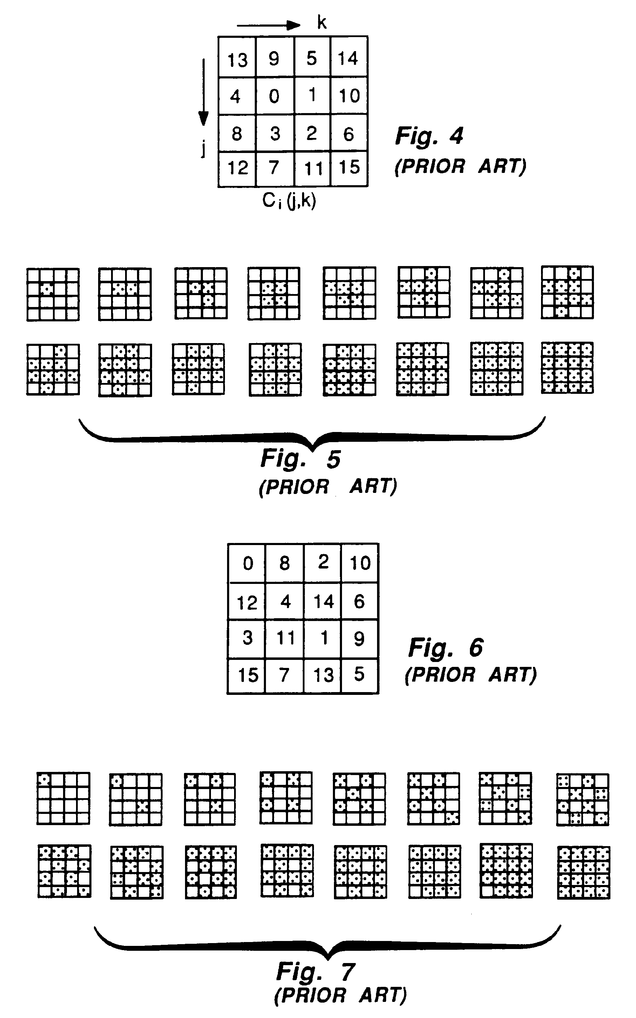

Group-1 screen functions are generally known as "fattening" or "dot concentration" type functions. Figure 4 is a 4 x 4 group-1 matrix. As shown in Figure 5, sixteen gray levels (plus all white) are obtained by sequentially increasing the number of sub-elements which are printed in black.

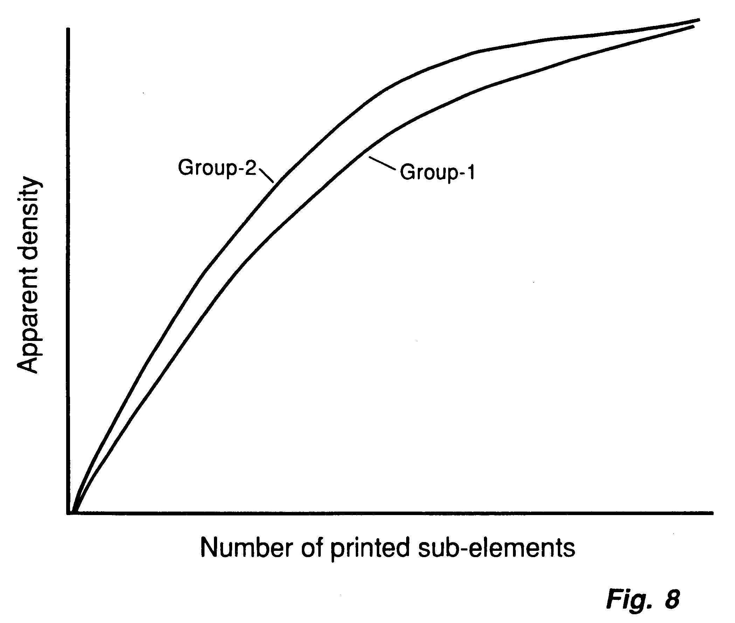

Group-2 screen functions are known generally as "dot dispersion" type. The best known dot dispersion type screen functions were developed by Bayer, Lippel, and Jarvis. Figure 6 is typical a 4 x 4 group-2 matrix. As shown in Figure 7, sixteen gray levels (plus all white) are obtained by sequentially increasing the number of sub-elements which are printed.

US-A-3 922 484 discloses a method of raster reproduction wherein, in response to increasing tone value steps, patterns are printed wherein at a lowest tone value a central area of a raster section is recorded with a minimal size dot. With increasing tone values, there is provided growth around the central area. At integral multiples of the lowest tone value, a dispersed growth pattern of dots is provided wherein each dot is a corresponding integral multiple of the smallest sized dot. However, further dispersion of dots ends while the tone values are still in the lower density range. In the higher density range increasing tone values causes growth by fattening of the dispersed dots.

IEEE Transactions on Communications, vol. COM 29, no.12, Stoffel et al. "A Surver of Electronic Techniques for Pictorial Image Reproduction describes known techniques used in image processing of documents wherein continuous tone and halftone pictorial images are transformed into spatially encoded representations compatible with binary output processes.

RCA Review, vol. 31, no.3, Klensch et al.: "Electronically Generated Halftone Pictures" discloses a halftone system wherein a halftone is represented by relatively large minimal dots using a coarse screen pattern. In the lightest highlight regions minimal dots are provided to define a screened density pattern. As density increases, new dots are added halfway between original dots and at highest density, dots increase uniformly in size.

### Disclosure of Invention

It has been found that by arranging the sub-elements differently in a cell, different apparent densities are attainable; even though the same number of sub-elements are present in each pattern. For example, a six-dot group-1 pattern in a 4 x 4 cell will have a different apparent density than a six-dot group-2 pattern in a similar cell.

This is caused by the fact that in a group-2 matrix, the sub-elements are dispersed in a manner to create a high spacial frequency so that the overlap of the sub-elements are minimal, whereas in a group-1 matrix, the sub-elements are grouped together so that there is greater overlap. Therefore the sub-elements of a group-1 matrix will cover less area than an equal number of sub-elements in a group-2 matrix.

Employing this characteristic, it is an object of the present invention to provide image processing for rendering halftone images with an increased number of gray level steps without increasing the number of sub-elements in the halftone cells.

This object is achieved by an apparatus according to claim 1.

In accordance with a feature of the present invention, a document copying apparatus which generates a plurality of electrical image signals of successive picture elements of an original document includes: means for comparing input image signals representing low optical density picture elements to a series of threshold values selected from a two dimensional matrix halftone cell in which an output signal density pattern grows in a low spacial frequency manner; and means for comparing input image signals representing high optical density picture elements to a series of threshold values selected from a two dimensional matrix halftone cell in which an output signal density pattern grows in a high spacial frequency manner.

### Brief Description of the Drawings

In the detailed description of the preferred embodiments of the invention presented below, reference is made to the accompanying drawings, in which:
Figure 1 is a schematic view of the electronic screening process known in the prior art;
Figure 2 is a typical electronic halftone function unit cell known in the prior art;
Figure 3 is a view of the possible halftone patterns of the unit cell of Figure 2;
Figure 4 is a 4 x 4 electronic halftone dot concentration function unit cell known in the prior art;
Figure 5 is a view of the possible halftone patterns of the unit cell of Figure 4;
Figure 6 is a 4 x 4 electronic halftone dot dispersion function unit cell known in the prior art;
Figure 7 is a view of the possible halftone patterns of the unit cell of Figure 6;
Figure 8 is a comparison of the apparent density produced by the unit cells of Figure 4 and Figure 6;
Figure 9 is a schematic view of the electronic screening process according to a preferred embodiment of the present invention;
Figure 10 is a schematic view of the timing of signals generated in the screening process of Figure 9;
Figure 11 is a schematic view of the electronic screening process according to another preferred embodiment of the present invention; and
Figure 12 is a comparison of the apparent density produced by the screening process of Figure 11.

### Best Mode for Carrying Out the Invention

The present description will be directed in particular to elements forming part of, or cooperating more directly with, apparatus in accordance with the present invention. It is to be understood that elements not specifically shown or described may take various forms well known to those skilled in the art.

It has been recognized that the apparent density produced by a group-1 matrix as a function of the number of printed sub-elements differs from the apparent density produced by a group-2 matrix for the same number of printed sub-elements. Further, the difference in apparent density between the group-1 and group-2 matrices changes with the density range.

Figure 8 is a comparison of the apparent density produced by group-1 and group-2 matrices as a function of the number of sub-elements which are printed. As can be seen from the figure, the slope of the group-1 matrix curve is greater in the high density portion of the curve, and the slope of the group-2 matrix curve is greater in the low density portion of the curve.

Since their density slopes are less in low density regions, group-1 matrices exhibit more observable density levels, and therefore less density contouring, at low densities than group-2 matrices because the group-2 matrix tone scale is compressed, resulting in rapid low density rise (high contrast). Accordingly, group-1 matrices would be preferred at low densities. On the otherhand, group-2 matrices exhibit more observable density levels, and therefore less density contouring, at high densities than group-1 matrices because the type 1 matrix tone scale is compressed at these densities, resulting in rapid high density rise (high contrast). Accordingly, group-2 matrices would be preferred at high densities. Accordingly, the present invention provides for mixing group-1 and group-2 matrices so that a group-1 matrix is used in low density areas of the image and a group-2 matrix is used in high density areas of the image. Good results have been observed when the cut between group-1 and group-2 matrices have been made at density levels of between 60 and 80 on a 255 gray level scale.

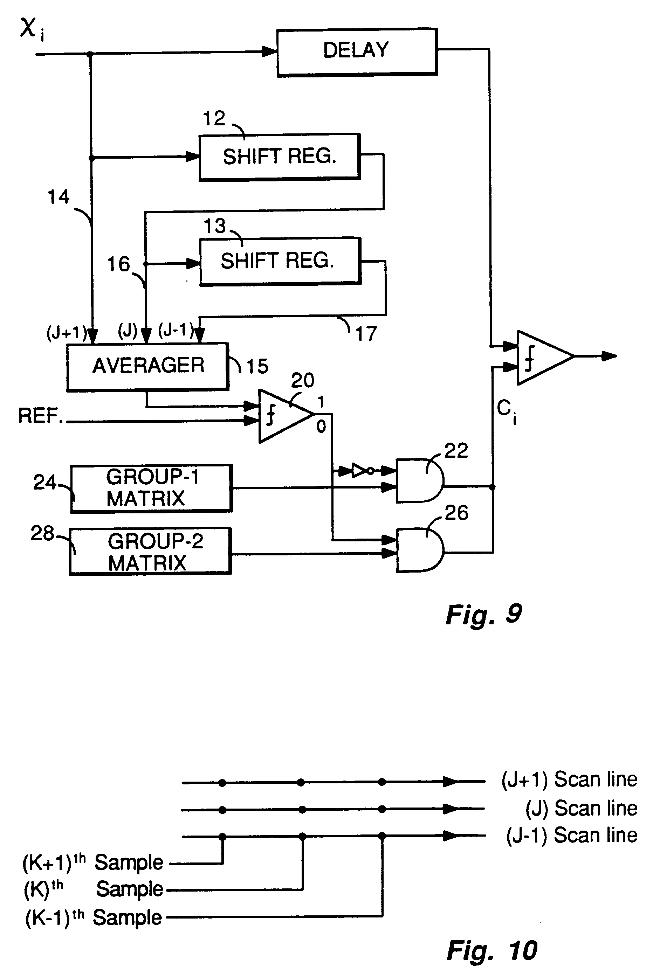

Figure 9 is a schematic view of the electronic screening process for switching between group-1 and group-2 matrices according to the average density of an area. As a scan line, designated (J-1), of the input signal Xᵢ is scanned, the electrical signals representing the density for each successive picture element along the scan line are stored in an analog shift register 12. As the next scan line, designated J, is scanned, the electrical signals from that line replace those of the preceding scan line in register 12, and the replaced signals are shifted into a second shift register 13.

Now, as the next line, designated (J+1), is scanned, its electrical signals replace those from line J in register 12 and are simultaneously applied along a conductor 14 to an averager 15. The signal outputs from register 12 replace those from the (J-1) line in register 13 and are simultaneously applied along conductor 16 to averager 15. simultaneously, the signals from scan line (J-1) shift from register 13 along a conductor 17 to averager 15.

It is now seen that averager 15 of Figure 9 serially receives the electrical signals from scan lines (J+1), J, and (J-1), with all three inputs synchronized such that the corresponding samples from each scan line arrive simultaneously.

Referring for the moment to Figure 10, averager 15 of Figure 9 compares the amplitude of the nine adjacent samples in a two-dimensional array of sampled information. Figure 10 depicts samples (J+1,K+1), (J+1,K), and (J+1,K-1) from scan line (J+1); samples (J,K+1), (J,K), and (J,K-1) from scan line J; and (J-1,K+1), (J-1,K), and (J-1,K-1) from scan line (J-1).

Referring back to Figure 9, a comparator 20 compares the averaged density signal from averager 15 with a reference threshold level determined on the basis of the density level selected for switching between group-1 and group-2 matrices. At low average density levels, the output of comparator 20 is a logical zero which, when inverted and applied to an AND gate 22, causes the threshold level Cᵢ to be selected in sequential order from a two-dimensional group-1 matrix 24. At high average density levels, the output of comparator 20 is a logical "ONE" which when applied to AND gate 22 causes the threshold level Cᵢ to be selected in sequential order from a two-dimensional group-2 matrix 28.

Figure 8, which is not to scale, shows this graphically by plotting the apparent density verses the number of printed sub-elements for group-l and group-2 matrices. For group-2 matrices, the density rises quickly at low densities and has a lower slope at maximum densities. In the case of group-1 matrices, the density rises more slowly at low densities and has a greater slope at maximum densities.

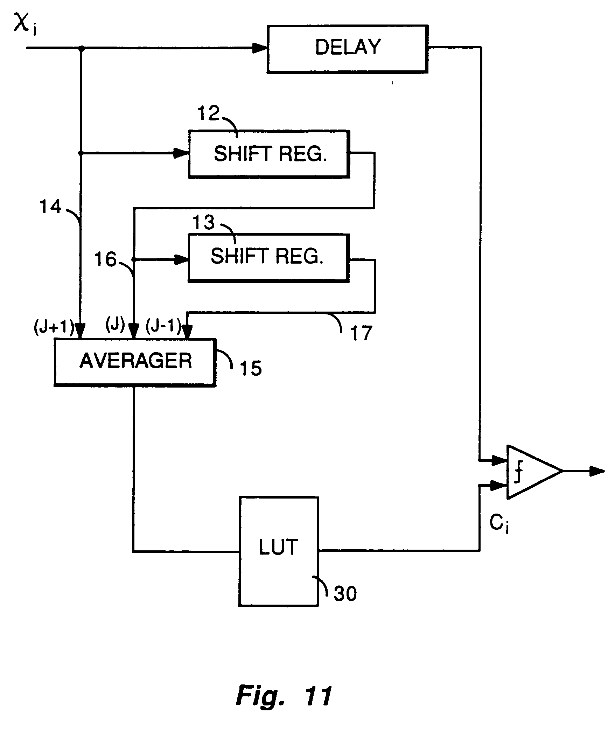

It is apparent that in the mid-density range, a given number of printed sub-elements will have different apparent densities for different matrix types. In accordance with another embodiment of the present invention illustrated in Figure 11, this characteristic is used to attain an even greater number of gray scale levels by mixing the matrices in the mid-density range.

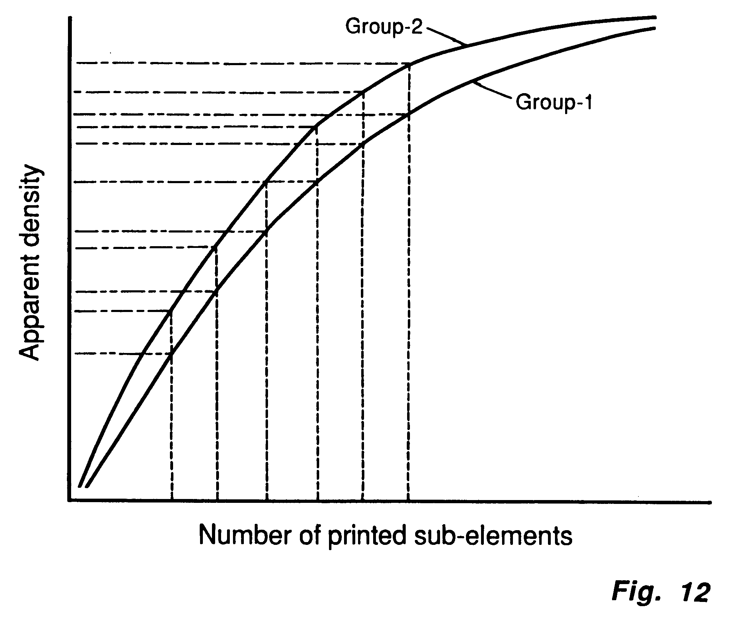

For example, there are illustrated in Figure 12, six different vertical lines representing different number of printed sub-elements. The intersections of the vertical lines with the density curves for group-1 and group-2 matrices are brought to the density scale where, going from bottom to top, eleven different densities are attainable by switching between matrices in the sequence 1,2,1,2,1,1 or 2,2,1,2,1,1. It should be noted that as many as twelve different densities are theoretically possible, but it is at least possible that there will be overlap between a dot pattern of one matrix and a dot pattern of the other matrix, as is seen between the third vertical line of the group-2 matrix and the forth vertical line of the group-1 matrix.

While it would be possible to use the mixed-dot process for the entire range, selecting between matrices for each density; the fact that there are more steps in the low density range for a group-l matrix and more steps in the high density range for a group-2 matrix can be exploited by using concentrated dot in the low density range and dispersion dot in the high density range. In the mid-region, both groups are mixed in accordance with a look up table 30 of Figure 11. The input to the table is the average gray level value of a sample image picture elements. The look up table will provide an output indicating the number of sub-elements to be printed and the matrix to be used for that gray level value.

The invention has been described in detail with particular reference to preferred embodiments thereof, but it will be understood that variations and modifications can be effected within the scope of the invention as defined in the claims.

## Claims

1. Apparatus for producing a halftone reproduction of an original image, said apparatus comprising:
means (12, 13, 15) for generating a series of input image signal values representing the tonal values of picture elements of the original image;
means (24) for generating a first series of different threshold values from a first matrix having a plurality of sub-elements having a threshold value pattern which grows around a core, the pattern defining the first series of threshold values;
means (28) for generating a second series of different threshold values from a second matrix having a plurality of sub-elements having a threshold value pattern which grows in a high spatial frequency, the pattern defining the second series of threshold values, characterized by
means (22; 30) for comparing respective input image signal values of the picture elements to respective different threshold values of the first matrix when the picture elements are in the lowest range of optical density;
means (26; 30) for comparing respective input image signals of the picture elements in the group to respective different threshold values of the second matrix when the picture elements are in the highest range of optical density; and
means responsive to said comparing means for generating output signals that represent an image having an output density pattern that grows in a low spatial frequency manner when threshold values of said first matrix are used and for outputting signals that have an output density pattern that grows in a high spatial frequency manner when threshold values of said second matrix are used.

2. Apparatus as set forth in Claim 1 wherein printed sub-elements of a matrix halftone cell in which an output density pattern grows in a low spatial frequency manner grow around a core.

3. Apparatus as set forth in Claim 1 wherein printed sub-elements of a matrix halftone cell in which an output density pattern grows in a low spatial frequency manner grow around a core central to the cell.

4. Apparatus as set forth in Claims 1, 2 or 3 further comprising means (15) for averaging the optical density of picture elements in areas of an original document.

5. Apparatus as set forth in Claims 1, 2, 3 or 4 wherein the lowest density range is defined to be optical densities below about 60 on a 256 grey level scale.

6. Apparatus as set forth in Claims 1, 2, 3 or 4 wherein the lowest density range is defined to be optical densities below about 80 on a 256 grey level scale.

7. Apparatus as set forth in any of Claims 1 through 6 wherein there is further provided
means (30) for comparing input image signals representing picture elements of the original document in a middle optical range of densities to a series of threshold values selected in sequential order from said first (24) or said second (28) matrix according to the optical density of the picture element.

8. Apparatus as set forth in any of Claims 1 through 7 and wherein said means responsive to said comparing means generates said output signals wherein each signal represents a print or no-print decision characterized by a corresponding one of two print values.

9. The apparatus of Claim 1 and wherein an input signal Xᵢ represents the lightness or grey level information at a sampling point i of an image and input signals Xᵢ of sample image picture elements are compared with a series of threshold values Cᵢ selected in sequential order from a two-dimensional matrix defined to be a halftone cell threshold set, and the output signals represent a print/no-print decision and further wherein the series of threshold values and their arrangement within the threshold set determine the grey scale range, the frequency, angle, and other properties of a halftone pictorial image, each threshold level Cᵢ is determined by a comparison j x k matrix and when the input signal Xᵢ exceeds the threshold level Cᵢ, the corresponding sub-element is determined to have a print decision logic level so that by comparing the input signals Xᵢ with the threshold levels j x k, output signals Oᵢ are produced and a density pattern is formed of a combination of j x k sub-elements wherein the j x k sub-elements are systematically printed or left blank.

## Patentansprüche

1. Vorrichtung zum Herstellen einer Rasteraufnahme von einem Originalbild, mit
Mitteln (12, 13, 15) zum Erzeugen einer Reihe von Eingangsbildsignalwerten, die die Tonwerte von Bildelementen des Originalbildes darstellen,
einer Einrichtung (24) zum Erzeugen einer ersten Reihe unterschiedlicher Schwellenwerte von einer ersten Matrix mit einer Vielzahl von Unterelementen mit einem Schwellenwertmuster, das um einen Kern herum wächst und die erste Reihe von Schwellenwerten bildet,
einer Einrichtung (28) zum Erzeugen einer zweiten Reihe unterschiedlicher Schwellenwerte von einer zweiten Matrix mit einer Vielzahl von Unterelementen mit einem Schwellenwertmuster, das in einer hohen Raumfrequenz wächst und die zweite Reihe von Schwellenwerten bildet,
**gekennzeichnet durch** Mittel (22; 30) zum Vergleichen zugeordneter Eingangsbildsignalwerte der jeweiligen Bildelemente mit jeweils unterschiedlichen Schwellenwerten der ersten Matrix, wenn sich die Bildelemente im niedrigsten optischen Dichtebereich befinden,
Mittel (26; 30) zum Vergleichen zugeordneter Eingangsbildsignale der jeweiligen Bildelemente der Gruppe mit jeweils unterschiedlichen Schwellenwerten der zweiten Matrix, wenn sich die Bildelemente im höchsten optischen Dichtebereich befinden, und
auf die Vergleichsmittel reagierende Mittel zum Erzeugen von Ausgangssignalen, die ein Bild mit einem Ausgangsdichtemuster darstellen, das auf niederfrequente Weise wächst, wenn Schwellenwerte der ersten Matrix verwendet werden, und zum Abgeben von Signalen, die ein Ausgangsdichtemuster haben, das auf hochfrequente Weise wächst, wenn Schwellenwerte der zweiten Matrix verwendet werden.

2. Vorrichtung nach Anspruch 1, dadurch gekennzeichnet, daß gedruckte Unterelemente einer Matrix-Rasterzelle, in der ein Ausgangsdichtemuster auf niederfrequente Weise wächst, um einen Kern herum wachsen.

3. Vorrichtung nach Anspruch 1, dadurch gekennzeichnet, daß gedruckte Unterelemente einer Matrix-Rasterzelle, in der ein Ausgangsdichtemuster auf niederfrequente Weise wächst, um einen mittig zur Zelle angeordneten Kern herum wachsen.

4. Vorrichtung nach Anspruch 1, 2 oder 3, gekennzeichnet durch eine Einrichtung (15) zum Mitteln der optischen Dichte von Bildelementen in Bereichen einer Originalvorlage.

5. Vorrichtung nach Anspruch 1, 2, 3 oder 4, dadurch gekennzeichnet, daß der Bereich geringster Dichte optischen Dichtewerten von unter 60 auf einer 256 Grauwertskala entspricht.

6. Vorrichtung nach Anspruch 1, 2, 3 oder 4, dadurch gekennzeichnet, daß der Bereich geringster Dichte optischen Dichtewerten von unter 80 auf einer 256 Grauwertskala entspricht.

7. Vorrichtung nach Anspruch 1 bis 6, gekennzeichnet durch eine Einrichtung (30), die Eingangsbildsignale, welche Bildelemente der Originalvorlage in einem mittleren optischen Dichtebereich darstellen, mit einer Reihe von Schwellenwerten vergleicht, die gemäß der optischen Dichte des Bildelements der Reihe nach aus der ersten (24) oder der zweiten Matrix (28) ausgewählt werden.

8. Vorrichtung nach Anspruch 1 bis 7, dadurch gekennzeichnet, daß die auf die Vergleichsmittel reagierende Einrichtung Ausgangssignale erzeugt, von denen jedes eine von einem von zwei Druckwerten gekennzeichnete Entscheidung "drucken" oder "nicht drucken" darstellt.

9. Vorrichtung nach Anspruch 1, dadurch gekennzeichnet, daß ein Eingangssignal X₁ die Helligkeits- oder Grauwertinformationen an einem Abtastpunkt i eines Bildes darstellt, daß die Eingangssignale X₁ der Bildelemente des abgetasteten Bildes mit einer Reihe von Schwellenwerten C₁ verglichen werden, die in einer Reihenfolge aus einer zweidimensionalen, als Rasterschwellensatz definierten Matrix ausgewählt werden, und die Ausgangssignale eine Entscheidung "drucken"/"nicht drucken" darstellen, und daß die Reihen von Schwellenwerten und ihre Anordnung innerhalb des Schwellenwertsatzes den Grauwertbereich, die Frequenz, den Winkel und andere Eigenschaften eines Rasterbildes bestimmen, wobei jeder Schwellenwertpegel C₁ bestimmt ist durch eine j x k Vergleichsmatrix und wobei das entsprechende Unterelement, wenn das Eingangssignal X₁ den Schwellenwertpegel C₁ übersteigt, einen Logikpegel mit der Entscheidung "drucken" hat, so daß bei einem Vergleich der Eingangssignale X₁ mit den Schwellenwertpegeln j x k Ausgangssignale O₁ erzeugt werden und ein Dichtemuster aus einer Kombination von j x k Unterelementen gebildet wird, wobei die j x k Unterelemente systematisch gedruckt oder frei gelassen werden.

## Revendications

1. Appareil destiné à réaliser une reproduction en demi-teinte d'une image originale, ledit appareil comprenant:
un moyen (12, 13, 15) servant à produire une série de valeurs de signaux d'image d'entrée représentant les valeurs tonales d'éléments d'image de l'image originale;
un moyen (24) servant à produire une première série de valeurs de seuil différentes à partir d'une première matrice comportant une pluralité de sous-éléments qui présentent une configuration de valeurs de seuil qui croît autour d'un noyau, la configuration définissant la première série de valeurs de seuil;
un moyen (28) servant à produire une deuxième série de valeurs de seuil différentes à partir d'une deuxième matrice comportant une pluralité de sous-éléments qui présentent une configuration de valeurs de seuil qui croît suivant une fréquence spatiale élevée, la configuration définissant la deuxième série de valeurs de seuil,
caractérisé par:
un moyen (22 ; 30) servant à comparer des valeurs respectives de signaux d'image d'entrée des éléments d'image avec des valeurs de seuil différentes respectives de la première matrice lorsque les éléments d'image se trouvent dans la partie la plus basse de l'intervalle des densités optiques;
un moyen (26 ; 30) servant à comparer des signaux d'image d'entrée respectifs des éléments d'image du groupe avec des valeurs de seuil différentes respectives de la deuxième matrice lorsque les éléments d'image se trouvent dans la partie supérieure de l'intervalle des densités optiques ; et
un moyen qui répond auxdits moyens de comparaison en produisant des signaux de sortie qui représentent une image possédant une configuration de densités de sortie qui croît d'une manière faisant intervenir une basse fréquence spatiale lorsque des valeurs de seuil de ladite première matrice sont utilisées, et en produisant des signaux de sortie qui présentent une configuration de densités de sortie qui croît d'une manière faisant intervenir une haute fréquence spatiale lorsque des valeurs de seuil de ladite deuxième matrice sont utilisées.

2. Appareil selon la revendication 1, où les sous-éléments imprimés d'une cellule de tramage matricielle dans laquelle une configuration de densités de sortie croît d'une manière faisant intervenir une basse fréquence spatiale croissent autour d'un noyau.

3. Appareil selon la revendication 1, où les sous-éléments imprimés d'une cellule de tramage matricielle dans laquelle une configuration de densités de sortie croît d'une manière faisant intervenir une basse fréquence spatiale croissent autour d'un noyau central par rapport à la cellule.

4. Appareil selon la revendication 1, 2 ou 3, comprenant en outre un moyen (15) servant à prendre la moyenne des densités optiques d'éléments d'image se trouvant dans des zones d'un document original.

5. Appareil selon la revendication 1, 2, 3 ou 4, où la partie inférieure de l'intervalle de densités est définie pour des densités optiques situées en dessous d'environ 60 sur une échelle de 256 niveaux de gris.

6. Appareil selon la revendication 1, 2, 3 ou 4, où la partie inférieure de l'intervalle de densités est définie pour des densités optiques situées au-dessous d'environ 80 sur une échelle de 256 niveaux de gris.

7. Appareil selon l'une quelconque des revendications 1 à 6, où il est en outre prévu un moyen (30) servant à comparer des signaux d'image d'entrée représentant des éléments d'image du document original qui sont dans un intervalle intermédiaire de densités optiques avec une série de valeurs de seuil choisies suivant un ordre de succession dans ladite première matrice (24) ou ladite deuxième matrice (28) en fonction de la densité optique de l'élément d'image.

8. Appareil selon l'une quelconque des revendications 1 à 7, où ledit moyen qui répond audit moyen de comparaison produit lesdits signaux de sortie, dans lesquels chaque signal représente une décision d'impression ou de non-impression définie par l'une, correspondante, de deux valeurs d'impression.

9. Appareil selon la revendication 1, où un signal d'entrée Xᵢ représente l'éclairement, ou des informations de niveaux de gris, en un point d'échantillonnage "i" d'une image, des signaux d'entrée Xᵢ d'éléments d'image d'une image échantillon sont comparés avec une série de valeurs de seuil Cᵢ choisies suivant l'ordre de succession dans une matrice bidimensionnelle définie comme constituée par un ensemble de seuils d'une cellule de tramage, et les signaux de sortie représentent une décision d'impression ou de non-impression, et où, de plus, la série de valeurs de seuil et leur disposition à l'intérieur de l'ensemble de seuils déterminent l'étendue de l'échelle de gris, la fréquence, l'angle et d'autres propriétés d'une image en demi-teinte, chaque niveau de seuil Cᵢ est déterminé par une matrice j.k de comparaison, et, lorsque le signal d'entrée Xᵢ dépasse le niveau de seuil Cᵢ, le sous-élément correspondant est déterminé comme ayant un niveau logique de décision d'impression de sorte que, par comparaison des signaux d'entrée Xᵢ avec les niveaux de seuil j.k, des signaux de sortie Oᵢ sont produits et une configuration de densités est formée à l'aide d'une combinaison de j.k sous-éléments, où les j.k sous-éléments sont, de façon systématique, imprimés ou laissés en blanc.
